(19) Europäisches Patentamt
European Patent Office
Office européen des brevets

(11) Veröffentlichungsnummer: **0 356 948**
**A2**

# (12) EUROPÄISCHE PATENTANMELDUNG

(21) Anmeldenummer: **89115768.7**

(22) Anmeldetag: **26.08.89**

(51) Int. Cl.[5]: **C08L 81/06 , C08L 71/00 , C08L 27/18 , C08L 65/00**

(30) Priorität: **01.09.88 DE 3829695**

(43) Veröffentlichungstag der Anmeldung: **07.03.90 Patentblatt 90/10**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Ittemann, Peter, Dr.**
**217 Manor House Mill**
**Fort Mill, S.C. 29715(US)**
Erfinder: **Heinz, Gerhard, Dr.**
**Im Vogelsang 2**
**D-6719 Weisenheim/Berg(DE)**

## (54) Schlagzähmodifizierte, thermoplastische Formmassen mit verbesserter Kerb- und Lochschlagzähigkeit und deren Verwendung.

(57) Schlagzähmodifizierte, thermoplastische Formmassen mit verbesserter Kerb- und Lochschlagzähigkeit, enthaltend als wesentliche Komponenten

(i) 98 bis 2 Gew.% mindestens eines thermoplastischen Polykondensates (i) mit einem Gehalt an Alkalimetallsalzen von maximal 200 ppm aus der Gruppe der Polyarylethersulfone (A), Polyaryletherketone (B) oder Mischungen aus (A) und (B) und

(ii) 2 bis 98 Gew.% eines Tetrafluorethylen-ethylen-copolymeren (ii) mit einem Gehalt an polymerisierten Tetrafluorethyleneinheiten von 40 bis 60 Mol%, bezogen auf das Copolymere (ii), wobei die Gewichtsprozente von (i) und (ii) bezogen sind auf das Gesamtgewicht von (i) und (ii).

Die Formmassen können gegebenenfalls pro 100 Gew.-Teilen von (i) und (ii) zusätzlich 2 bis 60 Gew.-Teile eines verstärkend wirkenden Füllstoffs enthalten.

Die erfindungsgemäßen Formmassen finden Verwendung zur Herstellung von Formkörpern.

EP 0 356 948 A2

Xerox Copy Centre

# Schlagzähmodifizierte, thermoplastische Formmassen mit verbesserter Kerb- und Lochschlagzähigkeit und deren Verwendung

Die Erfindung betrifft schlagzähmodifizierte, thermoplastische Formmassen mit verbesserter Kerb- und Lochschlagzähigkeit, die enthalten als wesentliche Komponenten

(i) 98 bis 2 Gew.%, bezogen auf das Gewicht von (i) und (ii), mindestens eines thermoplastischen Polykondensates (i) mit einem Gehalt an Alkalimetallsalzen von maximal 200 ppm aus der Gruppe der Polyarylethersulfone (A), Polyaryletherketone (B) oder Mischungen aus (A) und (B) und

(ii) 2 bis 98 Gew.%, bezogen auf das Gewicht von (i) und (i), eines Tetrafluorethylen-ethylen-copolymeren (ii) mit einem Gehalt an polymerisierten Tetrafluorethyleneinheiten von 40 bis 60 Mol%, bezogen auf das Copolymere (ii), sowie gegebenenfalls 2 bis 60 Gew.-Teile eines verstärkend wirkenden Füllstoffs pro 100 Gew.-Teilen von (i) und (ii).

Polyarylethersulfone und Polyaryletherketone haben aufgrund ihrer guten mechanischen, chemischen und elektrischen Eigenschaften sowie insbesondere ihrer hohen thermischen Beständigkeit in den letzten Jahren steigendes Interesse für die verschiedensten Verwendungszwecke gefunden. Aufgrund ihrer hohen Glastemperaturen bzw. Schmelzpunkte sind bei der thermoplastischen Verarbeitung der genannten Polykondensate Temperaturen von 300°C und mehr erforderlich.

Bei derart hohen Temperaturen ist bei den nicht stabilisierten Polykondensaten eine Tendenz zur Zersetzung zu erkennen, die sich in einer erheblichen Steigerung der Schmelzviskosität oder in einer Dunkelfärbung zeigt, wenn nicht bestimmte Maßnahmen zur Stabilisierung des Polykondensats getroffen werden.

In der DE-B-22 11 807 (US-A-3 794 615) werden Polyarylethersulfonen 0,01 bis 4 Gew.% einer Phosphorverbindung zur thermischen Stabilisierung zugesetzt. Ausweislich der Beispiele wird dadurch eine Verringerung der Schmelzviskositätszunahme um etwa den Faktor 2 erreicht. Dies ist jedoch für manche Anwendungszwecke immer noch nicht ausreichend.

Auch in der DE-B-22 21 969 (US-A-3 708 454) werden thermisch stabilisierte Polyarylethersulfone beschrieben, die neben 2 bis 40 Gew.% Asbest oder Titandioxid noch 0,2 bis 15 Gew.% eines zweiwertigen Metalloxids oder -sulfids enthalten, das sich mit Wasser nicht zu einem entsprechenden Hydroxid umsetzt.

Die Zugabe von derartig großen Mengen an Füllstoffen und Metallverbindungen zu Polyarylethersulfonen hat jedoch äußerst nachteilige Auswirkungen auf die Transparenz daraus hergestellter Formmassen. Dies ist für viele Anwendungszwecke nicht akzeptabel.

Aufgrund ihrer guten Wärmestandfestigkeit haben Polyarylethersulfone auch Verwendung im medizinischen Bereich gefunden. In diesem Bereich ist es erforderlich, daß sich die daraus hergestellten Gegenstände wiederholt bei z.B. 140° im Wasserbad (unter Druck) sterilisieren lassen, ohne daß die Transparenz oder die mechanischen Eigenschaften darunter leiden. Dieses Kriterium wird von handelsüblichen Polyarylethersulfonen, die nicht stabilisiert sind, nicht erfüllt.

Ein anderes Anwendungsgebiet von Polyarylethersulfonen ist der Einsatz in Form von Rohren zur Leitung von Dampf, z.B. in Fernwärmenetzen, oder anderen heißen Medien. Hierzu ist der Erhalt der mechanischen Eigenschaften auch unter Bedingungen hohen Innendrucks bei erhöhten Temperaturen erforderlich.

In der europäischen Patentanmeldung Nr. 88 109 631.7 werden ferner hochtemperaturbeständige, thermoplastische Formmassen beschrieben, die neben Polyarylethersulfonen als wesentliche Komponente noch Polyaryletherketone und gegebenenfalls Füllstoffe enthalten und die bei Temperaturen von 400°C über längere Zeiträume stabil sind und keine signifikante Erhöhung der Schmelzviskosität zeigen. Diese Formmassen, die einen Gehalt an Alkalimetallsalzen von weniger als 100 ppm, berechnet als Alkalimetall und bezogen auf das Gesamtpolykondensat, aufweisen können, können auch bei erhöhten Temperaturen, gegebenenfalls unter Druck, längere Zeit gelagert werden, ohne daß die Gebrauchseigenschaften, insbesondere die Transparenz und die mechanischen Eigenschaften, nennenswert beeinträchtigt werden.

Für wärmefeste Überzüge geeignete Zusammensetzungen auf der Grundlage von thermoplastischen aromatischen Polysulfonen und zumindest einem Fluorkohlenstoffpolymeren werden in der DE-A-24 18 284 (US-A-3 981 945) beschrieben. Als geeignetes Fluorkohlenstoffpolymer wird insbesondere Polytetrafluorethylen genannt. Verwendbar sind jedoch auch Copolymere von Tetrafluorethylen mit bis zu 15 Gew.% an anderen olefinisch ungesättigten Monomeren, wie Ethylen, Vinylchlorid und Hexafluorpropen. Zur Beschichtung wird die Zusammensetzung auf das Substrat aufgebracht und in Gegenwart von Sauerstoff bei Temperaturen von 330 bis 450°C gesintert.

Aromatische Polysulfonformmassen mit hoher Wärmebeständigkeit, guten mechanischen Eigenschaften, geringer Schrumpfneigung und Entformbarkeit, die bestehen aus 20 bis 80 Gew.% eines aromatischen

Polysulfons, 10 bis 70 Gew.% eines faserhaltigen Verstärkungsmittels oder anorganischen Füllstoffs und 0,5 bis 20 Gew.% eines Fluorharzes sind bekannt aus der EP-B-0 132 094. Aufgrund seiner hohen Schmelzviskosität, die sich selbst beim Schmelzpunkt von ungefähr 330 °C in einer kaum wahrnehmbaren Fließfähigkeit äußert, wird als Fluorharz vorzugsweise Polytetrafluorethylen verwendet. Als andere geeignete Fluorharze werden z.B. genannt: Tetrafluorethylen-perchloralkylvinylethercopolymere, Tetrafluorethylenhexafluorpropylen-copolymere, Tetrafluorethylen-ethylen-copolymere, Chlortrifluorethylen- und Vinylidenfluorid-polymere.

Bekannt sind ferner Mischungen aus Polyaryletherketonen und Tetrafluorethylen-copolymeren aus der EP-A-0 192 397. Die Formmassen, die eine verbesserte Lösungsmittelbeständigkeit, geringere Steifigkeit und gute dielektrische Eigenschaften aufweisen, enthalten neben dem semikristallinen thermoplastischen Polyaryletherketon mit einem Schmelzpunkt von über 320 °C als kontinuierliche Phase ein im wesentlichen nichtkristallines Tetrafluorethylen-copolymeres mit einem Gehalt an polymerisierten Tetrafluorethyleneinheiten von ungefähr 5 bis 85 Gew.%, bezogen auf das Gewicht des Copolymeren, als disperse Phase. Als andere Monomere zur Bildung der Tetrafluorethylen-copolymeren eignen sich beispielsweise Propylen, Vinylidenfluorid, Hexafluorpropylen oder Perfluoralkylvinylether, das sind Monomere, die mit Tetrafluorethylen nichtkristalline Copolymere ergeben.

In der Referatekopie 83-829556/48 (J5 8179-262) werden ferner selbstschmierende thermoplastische Formmassen beschrieben, die enthalten 40 bis 90 Gew.% eines Polyaryletherketons, 3 bis 40 Gew.% eines fluorhaltigen Harzes und 3 bis 40 Gew.% Kohlenstoffasern. Aus derartigen Formmassen hergestellte Formkörper zeigen eine hohe Widerstandsfähigkeit gegen Verschleißerscheinungen.

Die beschriebenen Formmassen auf der Grundlage von thermoplastischen Polyarylethersulfonen und/oder Polyaryletherketonen und Tetrafluorethylenpolymeren oder Tetrafluorethylencopolymeren mit einem hohen Gehalt an polymerisierten Tetrafluorethyleneinheiten weisen den Nachteil auf, daß sie nicht nach der Spritzgußtechnik zu Formkörpern verarbeitet werden können. Die genannten Patentpublikationen vermitteln ferner keine Lehre hinsichtlich einer Erhöhung der Zähigkeit derartiger Formmassen. Aufgrund der hohen Verarbeitungstemperaturen der hochtemperaturbeständigen Polyarylethersulfon- und/oder Polyaryletherketon-Formmassen können zur Zähmodifizierung keine allgemein üblichen vernetzten Polybutadienkautschuke bzw. Pfropfkautschuke eingesetzt werden.

Die Aufgabe der vorliegenden Erfindung bestand darin, die Schlagzähigkeit, insbesondere die Loch- und Kerbschlagzähigkeit, von hochtemperaturbeständigen, thermoplastischen Polyarylethersulfonen oder Polyaryletherketonen sowie vorzugsweise von Mischungen aus den genannten Polykondensaten zu verbessern, ohne daß durch die getroffene Maßnahme das hohe Niveau der anderen mechanischen Eigenschaften beeinträchtigt wird.

Diese Aufgabe könnte überraschenderweise gelöst werden durch die Verwendung von Polyarylethersulfonen und/oder -ketonen mit einem geringen Gehalt an Alkalimetallsalzen und den Zusatz eines speziellen Tetrafluorethylen-ethylen-copolymeren mit maximal 60 Mol% an polymerisierten Tetrafluorethyleneinheiten.

Gegenstand der Erfindung sind somit schlagzähmodifizierte, thermoplastische Formmassen, die enthalten als wesentliche Komponenten oder vorzugsweise bestehen aus

(i) 98 bis 2 Gew.%, vorzugsweise 98 bis 50 Gew.%, besonders bevorzugt 95 bis 80 Gew.% und insbesondere 95 bis 85 Gew.%, bezogen auf das Gesamtgewicht von (i) und (ii), mindestens eines thermoplastischen Polykondensats (i) mit einem Gehalt an Alkalimetallsalzen von maximal 200 ppm, berechnet als Alkalimetall und bezogen auf das thermoplastische Polykondensat (i), aus der Gruppe

A) der Polyarylethersulfone, aufgebaut aus

$A_1$) 0 bis 100 mol-% Einheiten der allgemeinen Formel I

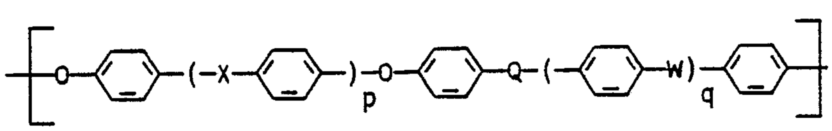

(I)

und/oder

$A_2$) 0 bis 100 mol-% Einheiten der allgemeinen Formel II

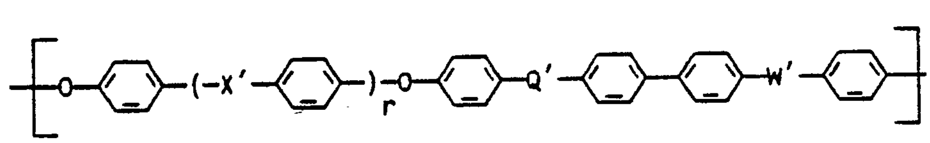

(II)

oder ihren kernsubstituierten $C_1$-$C_6$-Alkyl- oder $C_1$-$C_6$-Alkoxy-, Aryl-, Chlor- oder Fluorderivaten, wobei X, X′, Q, Q′ W und W′ unabhängig voneinander -$SO_2$-, -O-, -CO-, eine chem. Bindung oder -CRR′- sein können und jeweils mindestens eines der Brückenglieder X, Q, W und X′, Q′ und W′ -$SO_2$- ist, R und R′ jeweils Wasserstoffatome, $C_1$-$C_6$-Alkyl- oder $C_1$-$C_6$-Alkoxygruppen, Arylgruppen oder ihre Fluor- oder Chlorderivate darstellen, und
p, q und r jeweils den Wert 0 oder 1 haben,
B) der Polyaryletherketone, aufgebaut aus
$B_1$) 0 bis 100 mol-% Einheiten der allgemeinen Formel III

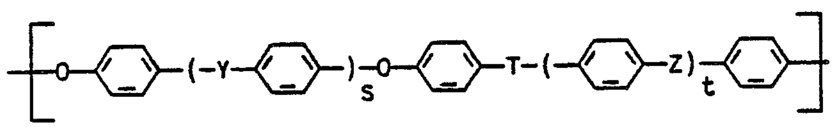 (III)

und/oder
$B_2$) 0 bis 100 mol-% Einheiten der allgemeinen Formel IV

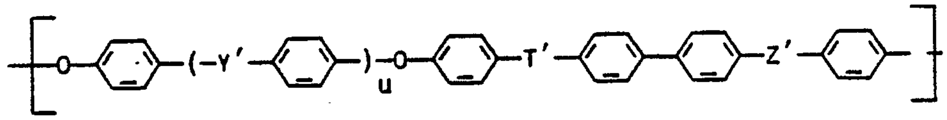 (IV)

oder ihren kernsubstituierten $C_1$-$C_6$-Alkyl-, $C_1$-$C_6$-Alkoxy-, Phenyl-, Chlor- oder Fluorderivaten, wobei Y, Y′, T, T′, Z und Z′ jeweils -CO-, -CR″R‴-, eine chem. Bindung oder -O- sein können und mindestens eines der Brückenglieder Y, T und Z bzw. Y′, T′ und Z′ -CO- ist,
R″ und R‴ die gleiche Bedeutung wie R und R′ haben können, und s, t und u jeweils den Wett 0 oder 1 haben,
oder von Mischungen aus (A) und (B), und

(ii) 2 bis 98 Gew.%, vorzugsweise 2 bis 50 Gew.% besonders bevorzugt 5 bis 20 Gew.% und insbesondere 5 bis 15 Gew.% bezogen auf das Gesamtgewicht von (i) und (ii), eines Tetrafluorethylen-ethylen-copolymeren (ii) mit einem Gehalt an polymerisierten Tetrafluorethyleneinheiten von 40 bis 60 Mol%, bezogen auf das Copolymere (ii).

Gegenstände der Erfindung sind ferner die Verwendung der schlagzähmodifizierten, thermoplastischen Formmassen nach einem der Ansprüche 1 bis 9 zur Herstellung von Formkörpern und Formkörper, erhältlich aus den schlagzähmodifizierten, thermoplastischen Formmassen nach einem der Ansprüche 1 bis 9.

Außerdem wurden spezielle Ausgestaltungen der schlagzähmodifizierten thermoplastischen Formmassen gemäß den Unteransprüchen 3 bis 9 gefunden.

Die erfindungsgemäß, mit Tetrafluorethylen-ethylen-copolymeren mit einem Gehalt an polymerisierten Tetrafluorethyleneinheiten von 40 bis 60 Mol%, bezogen auf das Tetrafluorethylen-ethylen-copolymere, schlagzähmodifizierten Polyarylethersulfone und/oder Polyaryletherketone zeigen überraschenderweise eine Reduzierung der Schmelzviskosität, verbunden mit einer erheblichen Verbesserung der Schlagzähigkeit, insbesondere der Loch- und Kerbschlagzähigkeit, bei gleichzeitig hohem Niveau der anderen mechanischen Eigenschaften, insbesondere einem hohen Elastizitätsmodul, während die Modifizierung mit Tetrafluorethylen-homopolymeren und anderen Tetrafluorethylen-copolymeren, insbesondere solchen mit einem hohen Gehalt an polymerisierten Tetrafluorethyleneinheiten, zu einem starken Abfall der Schlagzähigkeit und insbesondere der Lochschlagzähigkeit führen.

Zur stofflichen Seite der neuen, erfindungsgemäß schlagzähmodifizierten, thermoplastischen Formmassen, deren Herstellung und ihre Verwendung ist im einzelnen das folgende auszuführen:

Als Komponente (i) enthalten die erfindungsgemäßen thermoplastischen Formmassen Polykondensate (i) mit einem Gehalt an Alkalimetallsalzen von maximal 200 ppm, vorzugsweise von weniger als 100 ppm und insbesondere weniger als 60 ppm, berechnet als Alkalimetall und bezogen auf das Gewicht des Polykondensats (i), aus der Gruppe der Polyarylethersulfone (A), der Polyaryletherketone (B) und vorzugsweise Mischungen aus (A) und (B). Sofern als Polykondensat nicht ausschließlich mindestens ein Polyarylethersulfon Anwendung findet, bestehen die Mischungen zweckmäßigerweise aus

(A) 20 bis praktisch 100 Gew.%, vorzugsweise 60 bis 99 Gew.% und insbesondere 70 bis 95 Gew.% mindestens eines Polyarylethersulfons (A) und

(B) 80 bis praktisch 0 Gew.%, vorzugsweise 40 bis 1 Gew.% und insbesondere 30 bis 5 Gew.% mindestens eines Polyaryletherketons, wobei die Gew.% bezogen sind auf das Gesamtgewicht von (A) und (B).

Die Polyarylethersulfone (A), die einzeln oder in Form von Mischungen Anwendung finden können, sind aufgebaut aus wiederkehrenden Einheiten der allgemeinen Formeln (I) und/oder (II)

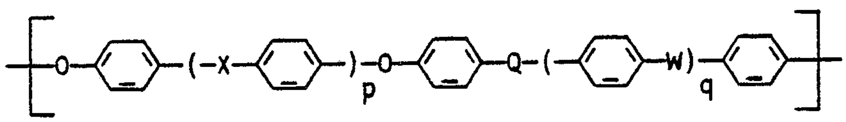

(I)

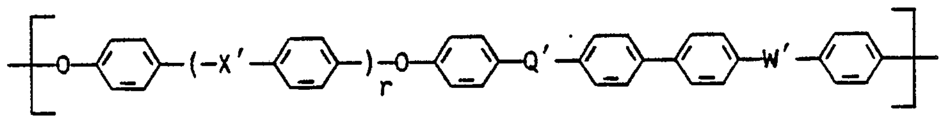

(II)

oder ihren kernsubstituierten $C_1$-$C_6$-Alkyl- oder $C_1$-$C_6$-Alkoxy-, Aryl-, Chlor- oder Fluorderivaten.

Die Substituenten X, X′, Q, Q′, W und W′ können unabhängig voneinander jeweils $-SO_2-$, -CO-, -O-, eine chemische Bindung oder -CRR′- sein, mit der Maßgabe, daß jeweils mindestens eines der Brückenglieder X, Q oder W eine $-SO_2$-Gruppe ist.

Entsprechendes gilt für die Brückenglieder X′, Q′ und W′, von denen ebenfalls eines eine $SO_2$-Gruppe ist. Die Substituenten R und R′ im Brückenglied -CRR′- stellen Wasserstoffatome, $C_1$-$C_6$-Alkyl- oder $C_1$-$C_6$-Alkoxygruppen, Arylgruppen oder ihre mit Chlor oder Fluor substituierten Derivate dar. Beispiele sind die Methyl-, Ethyl-, i- und n-Propylgruppen, die entsprechenden Alkoxygruppen und die $CF_3$-Gruppe. Bevorzugte Substituenten sind Wasserstoff sowie die Methyl-, Phenyl- und Trifluormethylgruppe.

Die Parameter p, q und r können jeweils den Wert 0 oder 1 haben.

In Polyarylethersulfonen, die sowohl Einheiten der Formel I als auch der Formel II aufweisen, können die Einheiten der Formeln (I) und (II) in statistischer Verteilung oder in Blockform vorliegen.

Das Molekulargewicht $\overline{M}_n$ (Zahlenmittelwert) der Polyarylethersulfone A liegt im Bereich von 2000 bis 200000, vorzugsweise von 5000 bis 100000 und insbesondere von 6000 bis 70000.

Der Anteil der Einheiten I und/oder II unterliegt keiner Beschränkung, d.h. er kann jeweils von 0 bis 100 Mol.% betragen. In letzterem Fall bauen sich die Polyarylethersulfone A aus nur einer wiederkehrenden Einheit auf. Bevorzugt sind die Polyarylethersulfone (A) aus 5 bis 95, insbesondere 15 bis 85 mol-% Einheiten der Formel (I) ($A_1$) und 5 bis 95, insbesondere 15 bis 85 mol-% Einheiten der Formel (II) ($A_2$) aufgebaut. Beispiele für Einheiten der allgemeinen Formel (I) und (II) sind:

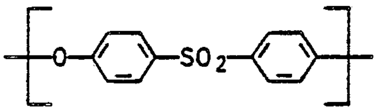

(I1)

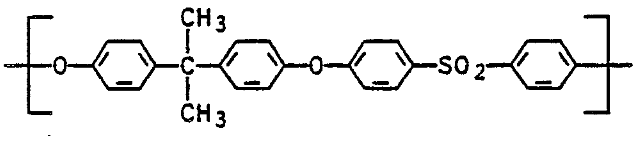

(I2)

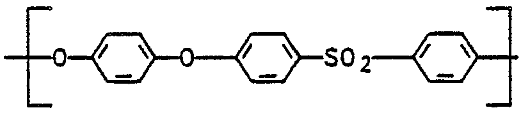

(I3).

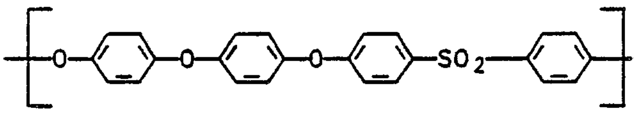

(I4)

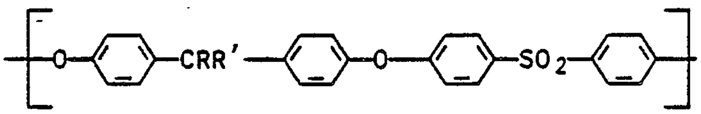

(I5)

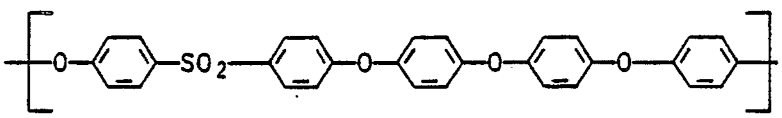

(I6)

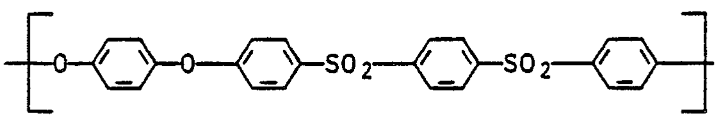

(I7)

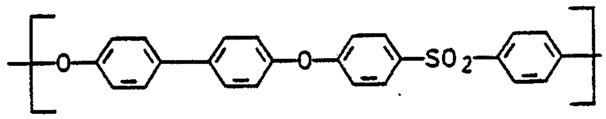

(I8)

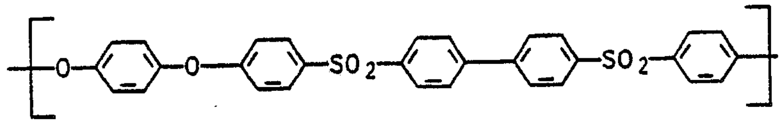

(II1)

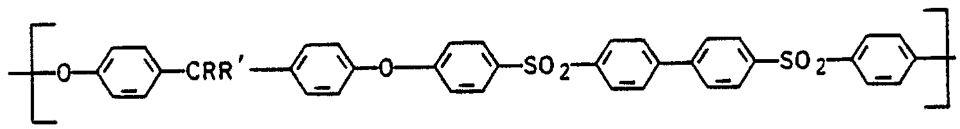

(II2)

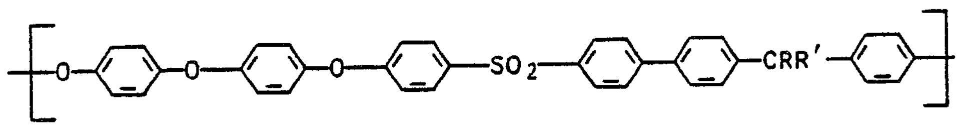

(II3)

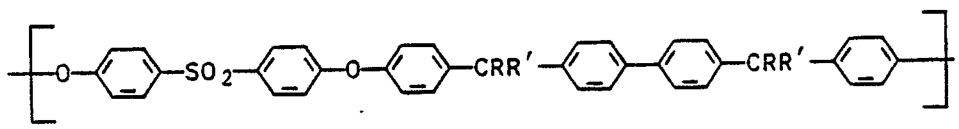

(II4)

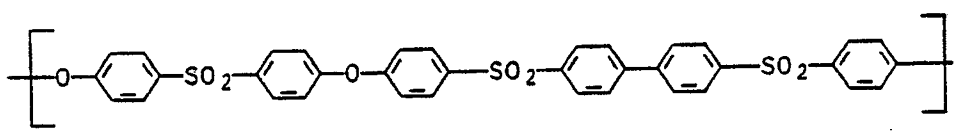

(II5)

wobei diese Auswahl nur stellvertretend für die unter die allgemeinen Formeln (I) und (II) fallenden Einheiten steht. Über die Substituenten X, Q, W bzw. X′ Q′ und W′ und die Parameter p, q und r lassen sich die vorstehenden Beispiele wie folgt beschreiben:

| | p | q | X | Q | W |
|---|---|---|---|---|---|
| I1 | 1 | 0 | $-SO_2-$ | $-SO_2-$ | - |
| I2 | 1 | 0 | $-C(CH_3)_2-$ | $-SO_2-$ | - |
| I3 | 0 | 0 | - | $-SO_2-$ | - |
| I4 | 1 | 0 | -O- | $-SO_2-$ | - |
| I5 | 1 | 0 | -CRR'- | $-SO_2-$ | - |
| I6 | 1 | 1 | $-SO_2-$ | -O- | -O- |
| I7 | 0 | 1 | - | $-SO_2-$ | $-SO_2-$ |
| I8 | 1 | 0 | chem. Bdg. | $-SO_2-$ | - |

| | r | X' | Q' | W' |
|---|---|---|---|---|
| II1 | 0 | - | $-SO_2-$ | $-SO_2-$ |
| II2 | 1 | -CRR'- | $-SO_2-$ | $-SO_2-$ |
| II3 | 1 | -0- | $-SO_2-$ | -CRR'- |
| II4 | 1 | $-SO_2-$ | -CRR'- | -CRR'- |
| II5 | 1 | $-SO_2-$ | $-SO_2-$ | $-SO_2-$ |

Obwohl, wie bereits erwähnt, grundsätzlich beliebige Kombinationen der Substituenten X, Q und W bzw. X′, Q′ und W′ möglich sind, werden im allgemeinen solche Einheiten bevorzugt, in denen Q und W bzw. Q′ und W′ gleich sind, da die entsprechenden Monomeren in der Regel leichter zugänglich sind.

Besonders bevorzugt sind Polyarylethersulfone ($A_1$) oder ($A_2$), die 50 bis 100 mol-% an wiederkehrenden Einheiten der Formel (I1), (I2) und (II5) aufweisen.

Die Polyarylethersulfone (A) können auch mehrere verschiedene Einheiten der allgemeinen Formel (I) enthalten, d.h. sie können ein Copolymer mit statistischem oder blockweisem Aufbau sein.

Die Polyaryletherketone (B), die ebenfalls einzeln oder in Form von Mischungen Anwendung finden können, sind aufgebaut aus wiederkehrenden Einheiten der allgemeinen Formeln (III) und/oder (IV)

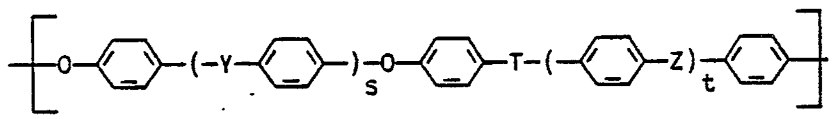

(III)

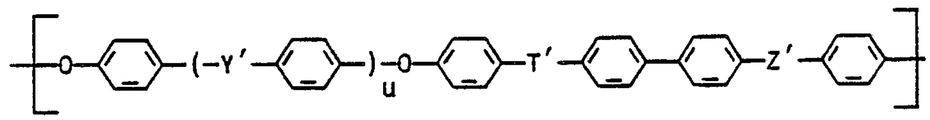

(IV)

Wie bei den Polyarylethersulfonen (A) können die Einheiten der Formel III und/oder IV auch mit $C_1$-$C_6$-Alkyl-, $C_1$-$C_6$-Alkoxy-, Phenyl-, Chlor- oder Fluor am aromatischen Kern substituiert sein.

Die Brückenglieder Y, Y′, T, T′, Z und Z′ können jeweils -CO-, -O-, -CR″R‴- oder eine chemische Bindung sein, mit der Maßgabe, daß mindestens eines der Brückenglieder Y, T, Z bzw. Y′, T′ und Z′ eine -CO-Gruppe ist. Die Substituenten R″ und R‴ des Brückengliedes -CR″R‴- können ebenfalls gleich oder verschieden sein und haben die Bedeutung von R und R′.

s, t und n haben jeweils den Wert 0 oder 1.

Die Polyetherketone B können nur aus Einheiten je einer der Formeln (III), ($B_1$) und (IV), ($B_2$) oder aus Einheiten der beiden Formeln aufgebaut sein; in letzterem Fall können die Einheiten $B_1$ und $B_2$ entweder statistisch oder in Form von Blöcken angeordnet sein. Der Anteil der Einheiten $B_1$ und $B_2$ an den Polyetherketonen B unterliegt keiner Beschränkung und kann jeweils von 0 bis 100 mol-% betragen. Bevorzugt werden Polyetherketone (B) aus 5 bis 95, insbesondere 15 bis 85 mol-% ($B_1$) und entsprechend 5 bis 95, insbesondere 15 bis 85 mol-% ($B_2$).

Das Molekulargewicht (Zahlenmittelwert) der Polyetherketone B liegt im allgemeinen im Bereich von 2000 bis 150000, vorzugsweise 4000 bis 70000.

Beispiele für Einheiten der Formeln (III) und (IV) sind solche, in denen in den oben angegebenen Beispielen für die Einheiten (I) und (II) die -$SO_2$-Gruppen jeweils durch -CO- ersetzt sind.

Diese Einheiten lassen sich mit den Parametern T, T′, Y, Y′, Z, Z′, s, t und n analog wie die Beispiele der Einheiten I und II beschrieben, indem -$SO_2$- jeweils durch -CO- ersetzt wird.

Als Beispiele für Dihydroxy- und Dihalogenverbindungen, die zur Herstellung der Polyarylethersulfone bzw. Polyetherketone in den erfindungsgemäßen Formmassen eingesetzt werden können, seien stellvertretend genannt:

Dihydroxyverbindungen

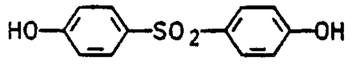

4,4′-Dihydroxydiphenylsulfon,

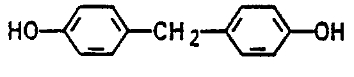

Di-(4-hydroxyphenyl)methan,

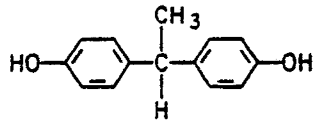

2,2-Di(4-hydroxyphenyl)ethan,

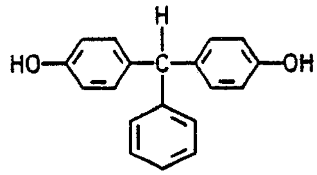

1-Phenyl-1,1-di-(4-hydroxyphenyl)-methan,

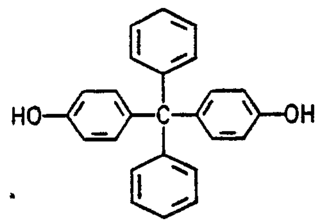

Diphenyl-di-(4-hydroxyphenyl)methan,

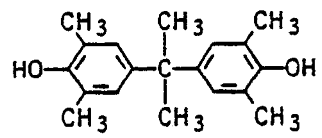

Tetramethylbisphenol A,

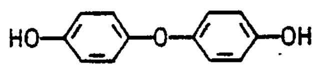

4,4′-Dihydroxydiphenylether,

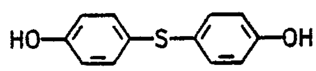

4,4′-Dihydroxydiphenylsulfid,

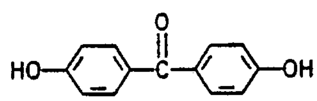

4,4′-Dihydroxybenzophenon,

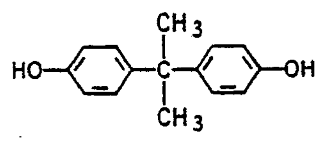

Bisphenol A,

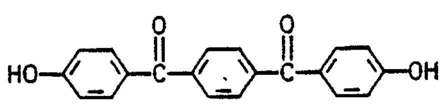

1,4-Di(4-hydroxybenzoyl)benzol,

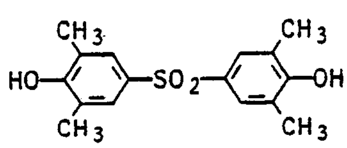

3,3′,5,5′-Tetramethyl-4,4′-dihydroxy-diphenylsulfon,

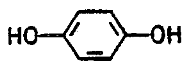

Hydrochinon,

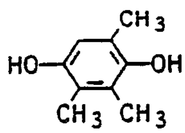

2,3,6-Trimethylhydrochinon,

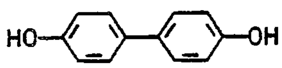

4,4'-Dihydroxydiphenyl,

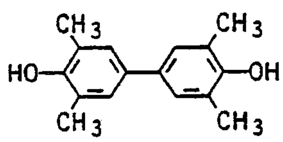

3,3',5,5'-Tetramethyldihydroxydiphenyl und

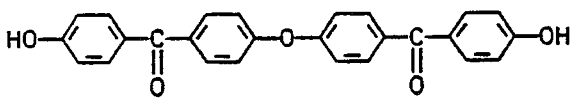

Di-(4-hydroxybenzophenon)ether

Von den vorstehend aufgeführten Dihydroxyverbindungen werden 4,4'-Dihydroxydiphenyl, 3,3',5,5'-Tetramethyl-4,4'-dihydroxydiphenyl, Bisphenol A, Tetramethyl-Bisphenol A, 4,4'-Dihydroxydiphenylsulfon und 2,3,6-Trimethylhydrochinon besonders bevorzugt.

Dihalogenverbindungen

Bezeichnung der Chlorverbindung

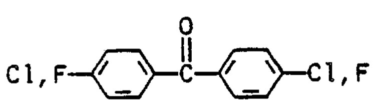

4,4'-Dichlorbenzophenon,

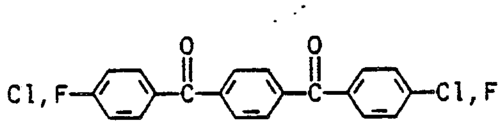

1,4-Di(4-chlorbenzoyl)benzol,

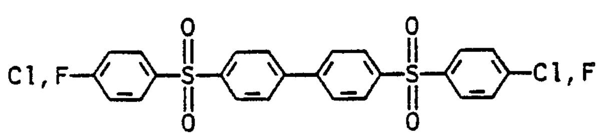

4,4'-Di-(4-chlorphenylsulfonyl)-diphenyl,

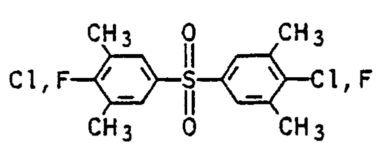

3,3',5,5'-Tetramethyl-4,4'-dichlordiphenylsulfon,

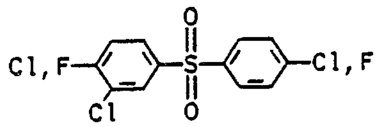

3'-Chlor-4,4'-dichlordiphenylsulfon,

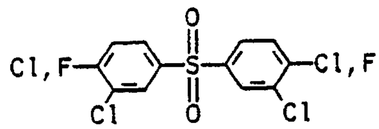

3,3',4,4'-Tetrachlordiphenylsulfon und

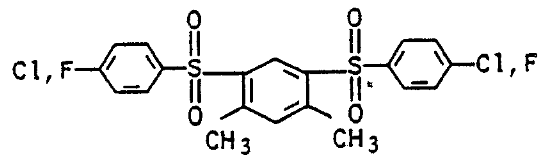

1,5-Dimethyl-2,4-di(4'-chlorphenylsulfonyl)benzol

Anstelle der genannten Dichlorverbindungen können auch die entsprechenden Difluorverbindungen Anwendung finden.

Von den vorstehend aufgeführten Dihalogenverbindungen werden 3,3',5,5'-Tetramethyl-4,4'-dichlordiphenylsulfon, 4,4-Di(4-chlorphenylsulfonyldiphenyl und 1,5-Dimethyl-2,4-di-(4'-chlorphenylsulfon)benzol besonders bevorzugt bzw. die entsprechenden Verbindungen, in denen die -$SO_2$-Gruppe durch die -CO-Gruppe ersetzt ist.

Als Monomere mit Biphenyleinheiten, die zur Herstellung von Polykondensaten (i) mit wiederkehrenden Einheiten der Formel (II) und (IV) eingesetzt werden, seien nur stellvertretend genannt:

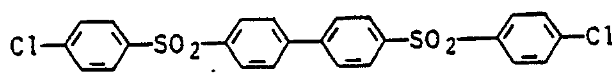

4,4'-Di(4-chlorphenylsulfonyl)biphenyl und

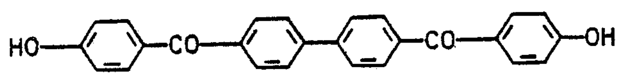

4,4'-Di(4-hydroxybenzoyl)-biphenyl

sowie grundsätzlich Verbindungen analoger Struktur, in denen die -$SO_2$- oder -CO-Gruppen durch andere Gruppen (O-, CRR') ersetzt sind.

Die vorstehend genannten Verbindungen können, solange die Voraussetzungen des Anspruchs 1 erfüllt sind, prinzipiell in beliebiger Kombination miteinander umgesetzt werden.

Die erfindungsgemäß verwendbaren Polyarylethersulfone (A) und Polyaryletherketone (B) können nach bekannten, in der Literatur beschriebenen Verfahren hergestellt werden.

Die Verfahrensparameter, beispielsweise Temperatur und Druck, sowie geeignete Lösungsmittel und evtl. Zusätze (Katalysatoren) sind die gleichen, wie sie für in der EP-A 113 112 und der EP-A 135 130 beschrieben sind, so daß sich hier nähere Angaben erübrigen.

Besonders geeignet ist die Umsetzung in aprotischen polaren Lösungsmitteln in Gegenwart von wasserfreien Alkalicarbonaten als Katalysatoren. Eine besonders bevorzugte Kombination ist N-Methylpyrrolidon als Lösungsmittel und $K_2CO_3$ als Base. Bei der Herstellung der Polyaryletherketone wird in der Regel wegen der erforderlichen höheren Reaktionstemperaturen Diphenylsulfon als Lösungsmittel eingesetzt.

Die Menge an Lösungsmittel beträgt im allgemeinen 5 bis 100 Mol, vorzugsweise 5 bis 20 Mol, bezogen auf ein Mol Monomere. Dies ergibt einen bevorzugten Feststoffgehalt der Reaktionslösung im Bereich von 5 bis 50 Gew.%, besonders bevorzugt 10 bis 40 Gew.%.

Das bei der Polykondensation entstehende Wasser kann mit Hilfe eines Azeotropbildners, Anlegen eines Unterdrucks oder vorzugsweise durch Einleiten eines Stickstoffstroms und Abdestillation entfernt werden.

Als Azeotropbildner eignen sich alle Verbindungen, die bei Normaldruck im Bereich der Reaktionstemperatur sieden und die sich mit dem Reaktionsgemisch homogen mischen lassen, ohne chemische Reaktionen einzugehen.

Die Reaktionstemperatur bei der Herstellung der Polyarylethersulfone (A) liegt im allgemeinen im

Bereich von 130 bis 220°C, vorzugsweise 150 bis 210°C; die Gesamt-Reaktionsdauer richtet sich nach dem gewünschten Kondensationsgrad, liegt aber im allgemeinen im Bereich von 0,1 bis 15 Stunden.

Bei der Herstellung der Polyaryletherketone (B) sind im allgemeinen höhere Temperaturen im Bereich von 150 bis 400°C, insbesondere 200 bis 350°C erforderlich.

Im Anschluß an die Polykondensation können zur Stabilisierung freie Phenolat-Endgruppen mit einem Arylierungs- oder Alkylierungsmittel, wie z.B. Methylchlorid, umgesetzt werden. Dies erfolgt vorzugsweise bei Temperaturen von 50 bis 200°C, vorzugsweise 50 bis 150°C.

Bedingt durch die bei der Polykondensation als Base eingesetzten Alkalimetallcarbonate, die im Verlauf der Reaktion in Alkalimetallhalogenide überführt werden, weisen die Polyarylethersulfone bzy. Polyaryletherketone Gehalte an Alkalimetallsalzen auf, die weit über 200 ppm liegen und daher nicht zur Herstellung der erfindungsgemäßen Formmassen geeignet sind.

Zur Abtrennung des, im allgemeinen in der Reaktionslösung suspendierten Alkalimetallhalogenids, können an sich geeignete Trenneinrichtungen, beispielsweise Klärfilter oder Zentrifugen benutzt werden.

Andererseits ist es auch möglich, die erhaltenen Polykondensate mehrmals mit Wasser oder mit Mischungen aus organischen Lösungsmitteln zu behandeln, die eine Extraktion des Alkalimetallhalogenids ermöglichen. Eine geeignete derartige Mischung ist beispielsweise eine Methanol-/Aceton-Mischung.

Wesentlich ist es in jedem Fall, daß die Filtration oder Zentrifugation bzw. die Extraktion solange durchgeführt werden, bis ein Gehalt an Alkalimetall in den erfindungsgemäßen Formmassen, bezogen auf das Polykondensat (i), von maximal 200 ppm, vorzugsweise weniger als 100 ppm und insbesondere weniger als 60 ppm erreicht ist.

Als besonders vorteilhaft hat es sich erwiesen, den Gehalt an Alkalimetall möglichst weit zu senken, d.h. je niedriger der Salzgehalt, desto vorteilhafter sind in der Regel die Eigenschaften. Gehalte von maximal 10 ppm, insbesondere maximal 8 ppm sind daher erstrebenswert.

Die Bestimmung des Gehalts an Alkalimetallen kann durch an sich bekannte und in der Literatur beschriebene Verfahren erfolgen.

Die weitere Aufarbeitung der weitgehend alkalimetallfreien Polyarylethersulfone (A) bzw. Polyaryletherketone (B) kann auf an sich bekannte Weise erfolgen, z.B. durch Verdampfen des Lösungsmittels oder Ausfällung des Polymeren in einem geeigneten Nichtlösungsmittel. Derartige Verfahren sind dem Fachmann bekannt.

Prinzipiell eignen sich alle Polyaryletherketone, die auf nukleophile Weise, z.B. durch Kondensation von Dihalogen- mit Dihydroxyverbindungen, oder auf elektrophilem Weg, z.B. durch Friedel-Crafts-Acylierung, hergestellt werden können.

Derartige Verfahren werden z.B. in der DE-A-26 50 943 und der EP-A-1879 beschrieben, um nur jeweils ein Beispiel für die beiden genannten Herstellungsverfahren zu erwähnen. Im übrigen sind diese Herstellungsverfahren dem Fachmann bekannt.

Als Komponente (ii) enthalten die schlagzähmodifizierten thermoplastischen Formmassen erfindungsgemäß Tetrafluorethylen-ethylen-copolymere (ii) mit einem Gehalt an polymerisierten Tetrafluorethyleneinheiten von 40 bis 60 Mol%, vorzugsweise von 45 bis 55 Mol% und insbesondere von 48 bis 52 Mol%, bezogen auf das Tetrafluorethylen-ethylen-copoplymere

Derartige Tetrafluorethylen-ethylen-copolymere sind aus der Polymerchemie bekannt, werden z.B. in Kunststoffe-Plastics 1979 (8), Seiten 16-19 beschrieben und sind im Handel erhältlich, so daß sich nähere Angaben darüber praktisch erübrigen.

Geeignete Tetrafluorethylen-ethylen-copolymere besitzen eine Dichte von 1,70 bis 1,75 g/cm$^3$, einen Schmelzbereich von 275 ± 10°C, eine Reißfestigkeit (23°C) von 40 bis 46 N/mm$^2$, eine Reißdehnung (23°C) von 150 bis 200 % und eine Shore D-Härte von 67 bis 75 und werden von der Hoechst AG unter dem Warenzeichen ®Hostaflon ET und von der Firma DuPont unter dem Warenzeichen ®Tefzel vermarktet.

Die erfindungsgemäßen schlagzähmodifizierten, thermoplastischen Formmassen können zusätzlich verstärkend wirkende, faser- und/oder teilchenförmige Füllstoffe enthalten. Sofern derartige Füllstoffe Anwendung finden, werden diese zweckmäßigerweise in einer Menge von 2 bis 60 Gew.-Teilen, vorzugsweise 5 bis 45 Gew.-Teilen und insbesondere 10 bis 30 Gew.-Teilen pro 100 Gew.-Teilen der Komponenten (i) und (ii) eingesetzt.

Als verstärkend wirkende Füllstoffe seien beispielsweise Kohle- und vorzugsweise Glasfasern genannt, wobei die Glasfasern z.B. in Form von Glasgeweben, -matten, -vliesen und/oder vorzugsweise Glasseidenrovings oder geschnittener Glasseide aus alkaliarmen E-Glasen mit einem Durchmesser von 5 bis 20 µm vorzugsweise 8 bis 15 µm, zur Anwendung gelangen, die nach ihrer Einarbeitung eine mittlere Länge von 0,05 bis 1 mm, vorzugsweise 0,1 bis 0,5 mm, aufweisen.

Als teilchenförmige Füllstoffe kommen beispielsweise in Betracht: Glaskugeln, Quarzmehl, Silicium-, Bornitrid, Wollastonit, Calcium-, Magnesiumcarbonat, amorphe Kieselsäure, Calciumsilikat, Calciummetasilikat, Talkum, Kaolin, Glimmer und Feldspat. Geeignet sind ferner Mischungen dieser Füllstoffe oder Gemische aus faser- und teilchenförmigen Füllstoffen.

Als geeignete Zusatz- oder Hilfsstoffe, die üblicherweise in einer Menge von 0,01 bis 3 Gew.%, bezogen auf das Gesamtgewicht der Komponenten (i) und (ii) eingesetzt werden, seien beispielhaft genannt: Stabilisatoren, Oxidationsverzögerer, Gleit- und Entformungsmittel, Färbemittel, wie Farbstoffe und Pigmente, und Keimbildungsmittel.

Die erfindungsgemäßen schlagzähmodifizierten Formmassen können nach beliebigen bekannten Verfahren hergestellt werden, bei denen aus den Aufbaukomponenten Polyarylethersulfon (A) und/oder Polyaryletherketon (B) und den geeigneten Tetrafluorethylen-ethylen-copolymeren (ii) sowie gegebenenfalls den verstärkend wirkenden Füllstoffen, Zusatz- oder Hilfsstoffen im wesentlichen homogene Massen erhalten werden. Beispielsweise können die Aufbaukomponenten (A) und (ii) oder (B) und (ii) zu einem sogenannten Masterbatch verarbeitet und in diesen danach zusätzliches (A) bzw. (B) oder (B) bzw. (A) sowie gegebenenfalls Füllstoff eingebracht werden, so daß die Formmassen enthalten: (A) und (ii), (B) und (ii) oder (A), (B) und (ii) sowie gegebenenfalls Füllstoffe. Üblicherweise werden die Aufbaukomponenten (A) und/oder (B) und (ii) in Form von Granulaten und gegebenenfalls die Füllstoffe oder vorgefertigte Mischungen aus mindestens zwei der genannten Aufbaukomponenten bei Temperaturen von 0 bis 150 °C, vorzugsweise 10 bis 100 °C und insbesondere 10 bis 35 °C abgemischt. Die Herstellung der erfindungsgemäßen schlagzähmodifizierten Formmassen erfolgt bei einer Temperatur im Bereich von 300 bis 420 °C, vorzugsweise 320 bis 380 °C und einer Verweilzeit von 1 bis 20 Minuten, vorzugsweise von 3 bis 8 Minuten im beispielsweise fließfähigen, erweichten oder vorzugsweise geschmolzenen Zustand der Aufbaukomponenten (A) und/oder (B) und (ii), z.B. durch Rühren, Walzen, Kneten oder Extrudieren, beispielsweise unter Verwendung eines Doppelschnecken- oder Preßspritzmischextruders oder Kneters.

Die erfindungsgemäßen schlagzähmodifizierten, thermoplastischen Formmassen sind homogen, gut verarbeitbar und zeigen ein hohes mechanisches Eigenschaftsniveau. Hervorzuheben ist die hohe Steifigkeit bei verbesserter Schlagzähigkeit, insbesondere Lochschlagzähigkeit. Die Produkte finden Verwendung zur Herstellung von Formkörpern, z.B. Dichtungen, Lagerkäfige, Instrumententeile und Formteile, die mit heißem Wasser in Berührung kommen, für die Anwendung im medizinischen Bereich, bei der Lebensmittelverpackung sowie in Verbundwerkstoffen.

Beispiele 1 bis 12 und Vergleichsbeispiele I bis XI

Zur Herstellung der erfindungsgemäßen Formmassen und der Vergleichsprodukte wurden in den Beispielen 1 bis 12 bzw. den Vergleichsbeispielen I bis XI die folgenden Aufbaukomponenten eingesetzt.

AI: Polyphenylethersulfon, hergestellt durch Polykondensation von 4,4′-Dichlor-diphenylsulfon und Bisphenol A (Ultrason® S 2000 der BASF Aktiengesellschaft)

AII: Polyphenylethersulfon, hergestellt durch Polykondensation von 4,4′-Dichlor-diphenylsulfon und 4,4′-Dihydroxy-diphenylsulfon (Ultrason® E 2000 der BASF Aktiengesellschaft)

BI: Polyaryletheretherketon (Handelsprodukt PEEK 450G der Firma Imperial Chemical Industries PLC)

BII: Polyaryletheretherketon (Handelsprodukt PEEK 150G der Firma Imperial Chemical Industries PLC)

ii1) Tetrafluorethylen-ethylen-copolymer (Molverhältnis der Monomeren 1:1; Tefzel® 210 der Firma DuPont)

ii2) Tetrafluorethylen-ethylen-copolymer (Molverhältnis der Monomeren 1:1; Hostaflon® ET 6235 der Firma Hoechst Aktiengesellschaft)

Nicht erfindungsgemäß verwendbare fluorhaltige Copolymere:

FC1: Copolymer aus Tetrafluorethylen und perfluoriertem Vinylether (Teflon® PFA 340 der Firma DuPont)

FC2: Copolymer aus Tetrafluorethylen und Hexafluorpropylen (Teflon® FEP 100N der Firma DuPont)

FC3: Copolymer aus Tetrafluorethylen und einem perfluoriertem Comonomeren (Hostaflon® TFA 6505 der Firma Hoechst Aktiengesellschaft)

Zur Herstellung der erfindungsgemäßen Formmassen und Vergleichsprodukte wurden
90 Gew.-Teile Polyarylethersulfon oder Polyaryletherketon und
10 Gew.-Teile der Tetrafluorethylen-ethylen-copolymeren bzw. Tetrafluorethylen-copolymeren
in Granulatform bei 25 °C intensiv gemischt, die Mischung in einen ZSK 53 Extruder der Firma Werner und Pfleiderer, 7000 Stuttgart, eingebracht und gegebenenfalls unter Zusatz von
20 Gew.-Teilen einer Glasfaser

bei erhöhter Temperatur aufgeschmolzen. Die Umdrehungszahl des Extruders belief sich auf 200 Umdrehungen/Minute. Der Extruderdurchsatz betrug 20 kg/Stunde.

Die verwendeten Aufbaukomponenten, die Temperatur im Extruder und die an Prüfkörpern aus den hergestellten Formmassen gemessenen mechanischen Eigenschaften sind in der folgenden Tabelle zusammengefaßt.

Tabelle

| Beispiele / Vergleichsbeispiele | | 1 | 2 | I | II | III | IV |
|---|---|---|---|---|---|---|---|
| Aufbaukomponenten: | | | | | | | |
| Polyarylethersulfon | | AI | AI | AI | AI | AI | AI |
| Polyaryletherketon | | - | - | - | - | - | - |
| Tetrafluorethylen-ethylen-copolymer | | iil | iil | - | - | - | - |
| Tetrafluorethylen-copolymer | | - | - | FC1 | FC2 | FC3 | - |
| Glasfasern | | - | ja | - | - | - | - |
| Extrudertemperatur | [°C] | 350 | 350 | 350 | 350 | 350 | 350 |
| mechanische Eigenschaften: | | | | | | | |
| Reißfestigkeit nach DIN 53455 | [N/mm2] | 50,1 | 118,2 | 61,9 | 68,1 | 54,3 | 56,3 |
| Reißdehnung nach DIN 53455 | [%] | 11,0 | 2,8 | 6,2 | 5,5 | 6,5 | 25,5 |
| E-Modul nach DIN 53457 | [N/mm2] | 2430 | 6751 | 2349 | 2315 | 2431 | 2700 |
| Schlagzähigkeit nach DIN 53453 | [kJ/m2] | o.Br.* | 22,6 | 103,8 | 91,7 | 99,9 | o.Br.* |
| Kerbschlagzähigkeit nach DIN 53453 | [kJ/m2] | 9,50 | 8,58 | 5,86 | 6,05 | 6,07 | 3,60 |
| Lochschlagzähigkeit nach DIN 53453 | [kJ/m2] | 83,3 | 13,4 | 40,2 | 22,6 | 30,4 | 54,6 |
| Vicat VST/B/50 nach DIN 53460 | [°C] | 182,3 | - | - | - | - | 184 |

* ohne Bruch

Tabelle (Fortsetzung)

| Beispiele | | 3 | 4 | | | | |
|---|---|---|---|---|---|---|---|
| Vergleichsbeispiele | | | | V | VI | VII | VIII |
| Aufbaukomponenten: | | | | | | | |
| Polyarylethersulfon | | AII | AII | AII | AII | AII | AII |
| Polyaryletherketon | | – | – | – | – | – | – |
| Tetrafluorethylen-ethylen-copolymer | | iil | iil | – | – | – | – |
| Tetrafluorethylen-copolymer | | – | – | FC1 | FC2 | FC3 | – |
| Glasfasern | | – | ja | – | – | – | – |
| Extrudertemperatur | [°C] | 350 | 350 | 350 | 350 | 350 | 350 |
| mechanische Eigenschaften: | | | | | | | |
| Reißfestigkeit nach DIN 53455 | [N/mm2] | 65,5 | 114,5 | 76,0 | 78,1 | 71,3 | 53,8 |
| Reißdehnung nach DIN 53455 | [%] | 6,2 | 2,5 | 6,7 | 6,9 | 6,4 | 15 |
| E-Modul nach DIN 53457 | [N/mm2] | 2477 | 7128 | 2455 | 2493 | 2604 | 2900 |
| Schlagzähigkeit nach DIN 53453 | [kJ/m2] | o.Br.* | 21,5 | 61,1 | 61,1 | 74,0 | o.Br.* |
| Kerbschlagzähigkeit nach DIN 53453 | [kJ/m2] | 9,50 | 8,03 | 6,30 | 6,30 | 7,72 | 4,3 |
| Lochschlagzähigkeit nach DIN 53453 | [kJ/m2] | 98,3 | 10,8 | 25,50 | 21,90 | 20,58 | 90,0 |

* ohne Bruch

Tabelle (Fortsetzung)

| Beispiele<br>Vergleichsbeispiele | | 5 | IX | X | XI |
|---|---|---|---|---|---|
| Aufbaukomponenten: | | | | | |
| Polyarylethersulfon | | – | – | – | – |
| Polyaryletherketon | | BI | BI | BI | BI |
| Tetrafluorethylen-ethylen-copolymer | | ii2 | – | – | – |
| Tetrafluorethylen-copolymer | | – | FC1 | FC2 | FC3 |
| Glasfasern | | – | – | – | – |
| Extrudertemperatur | [°C] | 350 | 350 | 350 | 350 |
| mechanische Eigenschaften: | | | | | |
| Reißfestigkeit nach DIN 53455 | [N/mm2] | 66,8 | 90,2 | 83,3 | 75,3 |
| Reißdehnung nach DIN 53455 | [%] | 15,8 | 7,7 | 7,3 | 10,3 |
| E-Modul nach DIN 53457 | [N/mm2] | 3634 | 3597 | 3583 | 3627 |
| Schlagzähigkeit nach DIN 53453 | [kJ/m2] | o.Br.* | 39,2 | 38,4 | 102,7 |
| Kerbschlagzähigkeit nach DIN 53453 | [kJ/m2] | 7,05 | 7,84 | 7,68 | 6,98 |
| Lochschlagzähigkeit nach DIN 53453 | [kJ/m2] | 67,4 | 20,5 | 21,0 | 31,6 |

* ohne Bruch

Tabelle (Fortsetzung)

| Beispiele | | 6 | 7 | 8 | 9 |
|---|---|---|---|---|---|
| Aufbaukomponenten: | | | | | |
| Polyarylethersulfon (Massenprozente in der Mischung) | | AII(60) | AII(50) | AII(40) | AII(50) |
| Polyaryletherketon (Massenprozente in der Mischung) | | BII(10) | BII(20) | BII(30) | BII(50) |
| Tetrafluorethylen-ethylen-copolymer | | iil | iil | iil | iil |
| Glasfasern | | ja | ja | ja | nein |
| Extrudertemperatur | [°C] | 350 | 350 | 350 | 350 |
| mechanische Eigenschaften: | | | | | |
| Zugfestigkeit nach DIN 53455 | [$N/mm^2$] | 137 | 135 | 133 | 101 |
| Reißfestigkeit nach DIN 53455 | [$N/mm^2$] | 105 | 104 | 103 | 98 |
| Reißdehnung nach DIN 53455 | [%] | 3,0 | 2,9 | 2,8 | 5,1 |
| E-Modul nach DIN 53457 | [$N/mm^2$] | 8218 | 8351 | 8263 | 3320 |
| Schlagzähigkeit nach DIN 53453 | [$kJ/m^2$] | 21,2 | 18,0 | 21,3 | o.Br.* |
| Kerbschlagzähigkeit nach DIN 53453 | [$kJ/m^2$] | 6,8 | 6,6 | 6,0 | 9,8 |

* ohne Bruch

Tabelle (Fortsetzung)

| Beispiele | | 10 | 11 | 12 |
|---|---|---|---|---|
| Aufbaukomponenten: | | | | |
| Polyarylethersulfon (Massenprozente in der Mischung) | | AI(97) | AII(50) | AII(20) |
| Tetrafluorethylen-ethylen-copolymer (Massenprozente in der Mischung) | | ii1(3) | ii1(50) | ii1(80) |
| Extrudertemperatur | [°C] | 330 | 350 | 330 |
| mechanische Eigenschaften: | | | | |
| Reißfestigkeit nach DIN 53455 | [N/mm²] | 55,1 | 63,1 | 47,2 |
| Reißdehnung nach DIN 53455 | [%] | 23,0 | 20,1 | 70,8 |
| E-Modul nach DIN 53457 | [N/mm²] | 2670 | 2127 | 1760 |
| Schlagzähigkeit nach DIN 53453 | [kJ/m²] | o.Br.* | o.Br.* | o.Br.* |
| Kerbschlagzähigkeit nach DIN 53453 | [kJ/m²] | 4,8 | 11,7 | 21,5 |
| Lochschlagzähigkeit nach DIN 53453 | [kJ/m²] | 62,3 | 102,3 | 110 |
| Vicat VST/B/50 nach DIN 53460 | [°C] | 184 | - | - |

* ohne Bruch

## Ansprüche

1. Schlagzähmodifizierte, thermoplastische Formmassen, enthaltend als wesentliche Komponenten

(i) 98 bis 2 Gew.%, bezogen auf das Gesamtgewicht von (i) und (ii), mindestens eines thermoplastischen Polykondensats (i) mit einem Gehalt an Alkalimetallsalzen von maximal 200 ppm, berechnet als Alkalimetall und bezogen auf das thermoplastische Polykondensat (i), aus der Gruppe

A) der Polyarylethersulfone, aufgebaut aus

$A_1$) 0 bis 100 mol-% Einheiten der allgemeinen Formel I

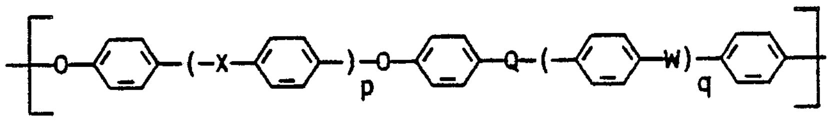

(I)

und/oder

$A_2$) 0 bis 100 mol-% Einheiten der allgemeinen Formel II

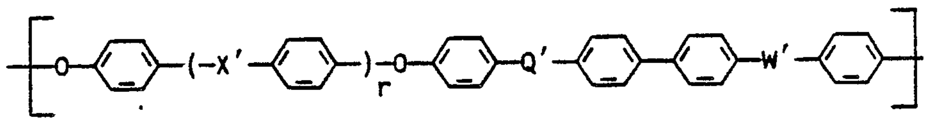

(II)

oder ihren kernsubstituierten $C_1$-$C_6$-Alkyl- oder $C_1$-$C_6$-Alkoxy-, Aryl-, Chlor- oder Fluorderivaten, wobei X, X′, Q, Q′ W und W′ unabhängig voneinander $-SO_2-$, -O-, -CO-, eine chem. Bindung oder -CRR′- sein können und jeweils mindestens eines der Brückenglieder x, Q, W und X′, Q′ und W′ $-SO_2-$ ist,

R und R′ jeweils Wasserstoffatome, $C_1$-$C_6$-Alkyl- oder $C_1$-$C_6$-Alkoxygruppen, Arylgruppen oder ihre Fluor- oder Chlorderivate darstellen, und

p, q und r jeweils den Wert 0 oder 1 haben,

B) der Polyaryletherketone, aufgebaut aus

$B_1$) 0 bis 100 mol-% Einheiten der allgemeinen Formel III

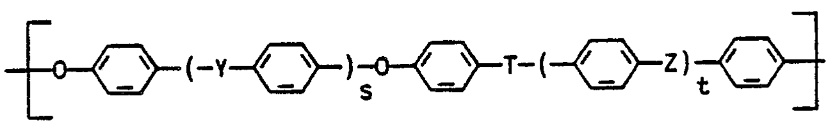

(III)

und/oder

$B_2$) 0 bis 100 mol-% Einheiten der allgemeinen Formel IV

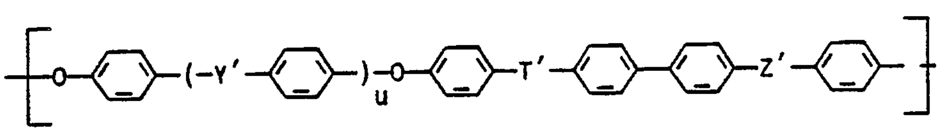

(IV)

oder ihren kernsubstituierten $C_1$-$C_6$-Alkyl-, $C_1$-$C_6$-Alkoxy-, Phenyl-, Chlor- oder Fluorderivaten, wobei Y, Y′, T, T′, Z und Z′ jeweils -CO-, -CR″R‴-, eine chem. Bindung oder -O- sein können und mindestens eines der Brückenglieder Y, T und Z bzw. Y′, T′ und Z′ -CO- ist R″ und R‴ die gleiche Bedeutung wie R und R′ haben können,

und s, t und u jeweils den Wert 0 oder 1 haben,

oder der Mischungen von (A) und (B), und

(ii) 2 bis 98 Gew.%, bezogen auf das Gesamtgewicht von (i) und (ii), eines Tetrafluorethylen-ethylen-copolymeren (ii) mit einem Gehalt an polymerisierten Tetrafluorethyleneinheiten von 40 bis 60 Mol%, bezogen auf das Copolymere (ii).

2. Schlagzähmodifizierte, thermoplastische Formmassen, bestehend aus

(i) 98 bis 2 Gew.%, bezogen auf das Gesamtgewicht von (i) und (ii), mindestens eines thermoplastischen Polykondensats (i) mit einem Gehalt an Alkalimetallsalzen von maximal 200 ppm, berechnet als Alkalimetall und bezogen auf das thermoplastische Polykondensat (i), aus der Gruppe

A) der Polyarylethersulfone, aufgebaut aus

$A_1$) 0 bis 100 mol-% Einheiten der allgemeinen Formel I

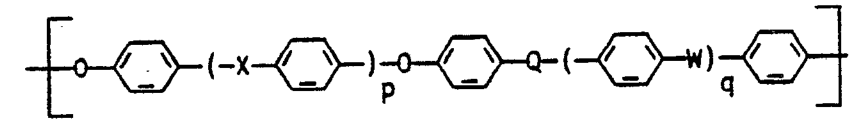

(I)

und/oder

$A_2$) 0 bis 100 mol-% Einheiten der allgemeinen Formel II

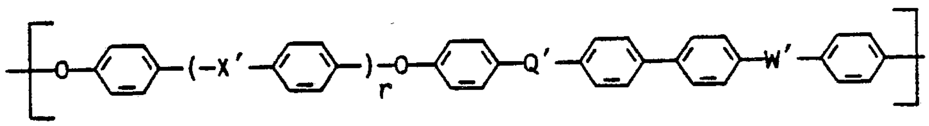

(II)

oder ihren kernsubstituierten $C_1$-$C_6$-Alkyl- oder $C_1$-$C_6$-Alkoxy-, Aryl-, Chlor- oder Fluorderivaten, wobei X, X′, Q, Q′ W und W′ unabhängig voneinander -$SO_2$-, -O-, -CO- eine chem. Bindung oder -CRR′- sein können und jeweils mindestens eines der Brückenglieder X, Q, W und X′, Q′ und W′ -$SO_2$- ist, R und R′ jeweils Wasserstoffatome, $C_1$-$C_6$-Alkyl- oder $C_1$-$C_6$-Alkoxygruppen, Arylgruppen oder ihre Fluor- oder Chlorderivate darstellen, und

p, q und r jeweils den Wert 0 oder 1 haben,

B) der Polyaryletherketone, aufgebaut aus

$B_1$) 0 bis 100 mol-% Einheiten der allgemeinen Formel III

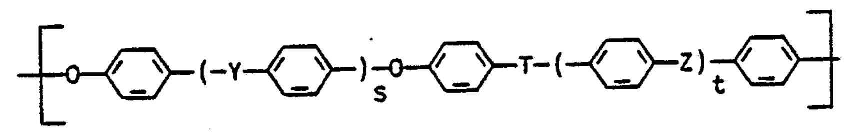

(III)

und/oder

$B_2$) 0 bis 100 mol-% Einheiten der allgemeinen Formel IV

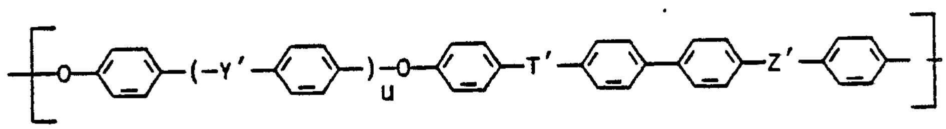

(IV)

oder ihren kernsubstituierten $C_1$-$C_6$-Alkyl-, $C_1$-$C_6$-Alkoxy-, Phenyl-, Chlor- oder Fluorderivaten, wobei Y, Y′, T, T′, Z und Z′ jeweils -CO-, -CR″R‴-, eine chem. Bindung oder -O- sein können und mindestens eines der Brückenglieder Y, T und Z bzw. Y′, T′ und Z′ -CO- ist R″ und R‴ die gleiche Bedeutung wie R und R′ haben können,

und s, t und u jeweils den Wert 0 oder 1 haben,

oder der Mischungen von (A) und (B), und

(ii) 2 bis 98 Gew.%, bezogen auf das Gesamtgewicht von (i) und (ii), eines Tetrafluorethylen-ethylen-copolymeren (ii) mit einem Gehalt an polymerisierten Tetrafluorethyleneinheiten von 40 bis 60 Mol%, bezogen auf das Copolymere (ii).

3. Schlagzähmodifizierte, thermoplastische Formmassen nach einem der Ansprüche 1 oder 2, dadurch gekennzeichnet, daß das thermoplastische Polykondensat (i) besteht aus

(A) 20 bis 100 Gew.% mindestens eines Polyarylethersulfons (A) und

(B) 0 bis 80 Gew.% mindestens eines Polyaryletherketons (B),

wobei die Gewichtsprozente bezogen sind auf das Gesamtgewicht von (A) und (B).

4. Schlagzähmodifizierte, thermoplastische Formmassen nach einem der Ansprüche 1 bis 3, dadurch gekennzeichnet, daß das thermoplastische Polykondensat (i) einen Gehalt an Alkalimetallsalzen von maximal 100 ppm, berechnet als Alkalimetall und bezogen auf das thermoplastische Polykondensat (i) aufweist.

5. Schlagzähmodifizierte, thermoplastische Formmassen nach einem der Ansprüche 1 bis 4, dadurch gekennzeichnet, daß die Formmasse pro 100 Gew.-Teilen von (i) und (ii) zusätzlich 2 bis 60 Gew.-Teile eines verstärkend wirkenden, faser- und/oder teilchenförmigen Füllstoffs enthält.

6. Schlagzähmodifizierte, thermoplastische Formmassen nach einem der Ansprüche 1 bis 5, dadurch gekennzeichnet, daß die Komponente (A) 50 bis 100 mol% an wiederkehrenden Einheiten der Formel I1

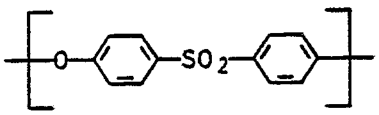

(I1)

enthält.

7. Schlagzähmodifizierte, thermoplastische Formmassen nach einem der Ansprüche 1 bis 5, dadurch gekennzeichnet, daß die Komponente (A) 50 bis 100 mol% an wiederkehrenden Einheiten der allgemeinen Formel I2

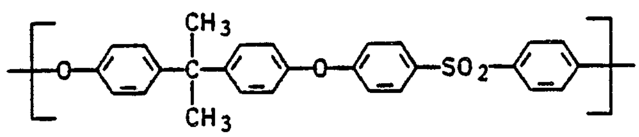

(I2)

enthält.

8. Schlagzähmodifizierte, thermoplastische Formmassen nach einem der Ansprüche 1 bis 5, dadurch gekennzeichnet, daß die Komponente (A) 50 bis 100 mol% an wiederkehrenden Einheiten der allgemeinen Formel II5

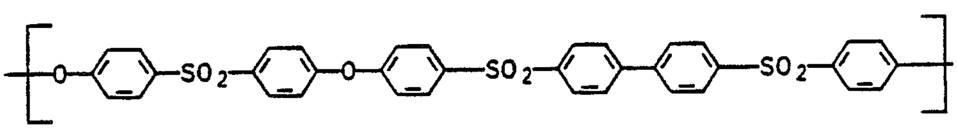

(II5)

enthält.

9. Schlagzähmodifizierte, thermoplastische Formmassen nach einem der Ansprüche 1 bis 8, dadurch gekennzeichnet, daß das Tetrafluorethylen-ethylen-copolymere einen Gehalt an polymerisierten Tetrafluorethyleneinheiten von 48 bis 52 Mol%, bezogen auf das Copolymere (ii) aufweist.

10. Formkörper, enthaltend als wesentliche Komponente schlagzähmodifizierte, thermoplastische Formmassen nach einem der Ansprüche 1 bis 9.